# EUROPÄISCHE PATENTANMELDUNG

(11) **EP 0 859 012 A2**
(43) Veröffentlichungstag der Anmeldung: **19.08.1998**
(21) Anmeldenummer: 97121600.7
(22) Anmeldetag: 08.12.1997
(51) Int. Cl.: C08B 31/04, C08B 31/10

(54) **Verfahren zur Herstellung von bioabbaubaren Werkstoffen**

(30) Priorität: 12.02.1997 DE 19705376
(71) Anmelder: FRAUNHOFER-GESELLSCHAFT ZUR FÖRDERUNG DER ANGEWANDTEN FORSCHUNG E.V., 80636 München (DE)
(72) Erfinder: Bader, Herbert, Dr., 93087 Alteglofsheim (DE); Rafler, Gerald, Dr., 14473 Potsdam (DE); Lang, Jacqueline, 10245 Berlin (DE); Lindhauer, Meinolf, Dr., 32805 Horn - Bad Meinberg (DE); Rüsch gen. Klaas, Mark, Dr., 48143 Münster (DE); Funke, Ulrike, Dr., 32758 Detmold (DE); Warwel, Siegfried, Prof. Dr., 48147 Münster (DE)
(74) Vertreter: Pfenning, Meinig & Partner

(57) **Zusammenfassung**

Die Erfindung betrifft ein Verfahren zur Herstellung von bioabbaubaren Werkstoffen, bei dem native und/oder aufbereitete Stärke durch Umsetzung mit pflanzlichen Fetten, Ölen und/oder deren Veredlungsprodukten zu mittleren bis hohen Substitutionsgraden DS der Stärke derivatisiert und hydrophiert werden.

## Beschreibung

Die Erfindung betrifft ein Verfahren zur Herstellung von bioabbaubaren Werkstoffen aus Stärken oder zur Herstellung von auf Stärke basierenden Kunststoffen. Die so hergestellten Produkte können als umweltverträgliche Verpackungsmittel, umweltverträgliche Verbundwerkstoffe in der Automobilindustrie für Konsumartikel als Einwegverpackung auch im Mehrschichtverbund Papier - Aluminium, als Kaschierkleber oder als Substitute für stärkegefüllte Kunststoffe Verwendung finden. In der Automobilindustrie ist ein Einsatz als Faserverbund oder als stärkegefüllter Werkstoff, versehen mit einer Kompatibilitätsschicht zwischen Füllstoff und Matrix, z.B. für Innenverkleidungen möglich.

Mit geeigneten Verfahren sind native Stärken als Füllstoff verwendbar, denen Weichmacher zugegeben werden können, um diese destrukturiert und thermoplastisch zu beispielsweise Folien oder Spritzgußartikel zu verarbeiten. Dabei werden deren Eigenschaften wegen der großen Hydrophilie durch die klimatischen Bedingungen und insbesondere durch die Umgebungsfeuchte beeinträchtigt.

Dem wird üblicherweise durch Zumischung hydrophober synthetisch hergestellter Polymere entgegengewirkt. Solche Mischungen sind jedoch lediglich in Nischenbereichen verwendbar, da die verwendeten Stärken nach wie vor hydrophil sind und Rekristallisation durch Alterung in der Stärkephase auftritt. Außerdem wirken sich Entmischungen, die durch ungenügende Verträglichkeit der Komponenten auftreten, negativ aus.

Zur Hydrophobierung von Stärken ist es bisher üblich, diese chemisch zu derivatisieren und dabei geeignete Modifizierungskomponenten zu verwenden. Solche bekannten Stärkederivate sind vor allem Ether und Ester mit überwiegend niedriger Methylengruppenzahl (C₁ - C₆) der jeweiligen Modifizierungskomponente.

Dabei werden zur Herstellung von Stärkeethern insbesondere nucleophile Substitutionsreaktionen an Stärken mit aliphatischen Halogenverbindungen in Gegenwart basischer Katalysatoren bzw. Akzeptoren (Williamson-Synthese), ringöffnende Anlagerungen von Oxiranen oder die Addition aktivierter Olefine (Michael-Addition) angewendet und dabei die Umsetzung vorwiegend heterogenphasig in wäßrig/alkalischer Suspension oder in einer inerten organischen Phase durchgeführt.

Obwohl die Synthese von Stärkeestern nach vielen bekannten Esterbildungsverfahren möglich ist, wird in der Regel nur die Veresterung mit aktivierten Säurederivaten (Halogenide, Anhydride) eingesetzt.

Für spezielle esteranaloge Derivate können aber auch andere geeignete Modifizierungskomponenten, wie z.B. Isocyanate für die Darstellung für Carbamidsäureestern der Stärke (Urethane) oder CS₂ für Dithiokohlensäureester (Xanthogenate) Verwendung finden.

Aus synthesetechnischen und auch applikativen Gründen wurden bisher nur sehr niedrig substituierte Stärkeester berücksichtigt. Dabei spielt mit Sicherheit auch die geringe bzw. vollständig fehlende Verfügbarkeit der mittel- und hochsubstituierten Stärkeester eine Rolle, wie dies beispielsweise von K. Engelskirchen in "Umwandlung von Stärke", in Methoden der organischen Chemie (Houben-Weyl), E 20, Makromolekulare Stoffe, Stuttgart, Georg Thieme Verlag, 1987 festgestellt worden ist.

Die bekannten Verfahren sind jedoch besonders bei hohen Derivatisierungsgraden uwirtschaftlich.

Die Erfindung hat sich die Aufgabe gestellt, ein Verfahren zur Herstellung von hydrophoben, bioabbaubaren werkstoffen vorzugeben, bei dem diese aus nachwachsenden Rohstoffen, wie Stärke, pflanzliche Fette, Öle oder deren Veredlungsprodukten zu Polymeren mit hohem Gebrauchswert, hydrophobiert zur Verfügung gestellt werden können.

Erfindungsgemäß wird diese Aufgabe durch die Merkmale des Patentanspruchs 1 gelöst. Vorteilhafte Ausgestaltungsformen und Weiterbildungen der Erfindung ergeben sich bei Verwendung der in den untergeordneten Ansprüchen genannten Merkmale.

Erfindungsgemäß hergestellte Polymere können dabei direkt als Monomaterial, als hydrophobe Komponente in bioabbaubaren Mischungen oder als Matrixmaterial in naturfaserverstärkten Verbunden bzw. als hydrophobes Beschichtungsmaterial auf den verschiedensten Gebieten der Technik Verwendung finden.

Dabei ist es besonders vorteilhaft möglich, über die erreichbare Struktur und das Verhältnis der Basiskomponenten (Stärke, Fette, Öle oder deren Veredlungsprodukte) unter Optimierung der Technologie des Herstellungsverfahrens, eine optimale Anpassung an die verschiedensten an die jeweilige Applikation angepaßten Anforderungen, zu erreichen.

Bei dem erfindungsgemäßen Verfahren werden bevorzugt native Stärken (Kartoffel-, Weizen-, Mais-, Amylomais-, Wachsmais-, Erbsenstärke u.a.) und/oder aufbereitete Stärken (Acetyl-, Hydroxyethyl-, Hydroxypropyl-, Carboxylmethyl-, Alkalistärke, u.a.) mittels pflanzlicher Fette, Öle oder deren Veredlungsprodukten (Fettsäuren bzw. ihren aktivierten Derivaten, epoxidierten Fettsäureestern, halogenierten Fettsäureestern) umgesetzt und dabei niedrige bis hohe Substitutionsgrade der Stärke durch Derivatisierung erreicht. Weitere geeignete Fette, Öle oder deren Veredlungprodukte sind heimische Pflanzenöle, Rapsöl, Sonnenblumenöl (Mono-, Di-, Triglyceride), freie Fettsäuren aus diesen Ölen (gesättigt, ungesättigt, epoxidiert), gemischte cyclische Fettsäureanhydride, Fettalkohole, Fettalkoholethoxylate, Fettalkoholsulfate, Fettsäureaddukte mit Maleinsäureanhydrid. Optional können Katalysatoren (z.B. Aluminiumoxide, -silikate, Tonerden, Zeolithe) verwendet werden.

Durch die spezielle chemische Struktur der verwendeten Modifizierungskomponenten kann sehr effizient hydrophobiert werden.

Bevorzugt sollte bei einem theoretischen Substitutionsgrad der Stärke von DS = 3 die Derivatisierung bis zu einem praktischen Substitutionsgrad der Stärke im Bereich zwischen 0,5 < DS < 3,0 durchgeführt werden.

Je nach Struktur der verwendeten hydrophoben Modifizierungskomponente wird eine gesonderte Synthese der erfindungsgemäßen Polymere durchgeführt.

Beispiele für mögliche Synthesen sind Acylierungsreaktionen (Fettsäure und Fettsäurehalogenide), Umesterungsreaktionen von Fettsäureestern, ringöffnenden Aloxylierungsreaktionen mit epoxidierten Fettsäureestern oder Alkylierungsreaktionen halogenierter Fettsäureester an den Hydroxylgruppen der Stärken.

Die Umsetzungen der einzelnen Komponenten erfolgen dabei in Abhängigkeit von der Hydrophobierungskomponente und dem jeweils der Anwendung angepaßten und dementsprechend angestrebten Substitutionsgrad entweder in Lösung, in gequollener organischer Phase (Gel), in nichtwäßriger Suspension oder mittels reaktiver Extrusion.

Je nach der angewendeten Verfahrensführung und der entsprechenden Konsistenz (Lösung, Gelphase, Suspension, Schmelze) wird die Herstellung der erfindungsgemäßen hydrophoben Stärkeprodukte in geeigneten Rührreaktoren, Knetern oder Extrudern unter Berücksichtigung der für die Hydrophobierung verwendeten Modifizierungskomponente und der erforderlichen Durchmischungsintensität durchgeführt.

Die wesentlichen Gebrauchs- und Verarbeitungseigenschaften der erfindungsgemäßen Polymere können durch den Substitutionsgrad der Stärke und den Anteil der jeweiligen Fettkomponente bestimmt werden. Dabei sind thermoplastisch verarbeitbare Kunststoffe, Komponenten in bioabbaubaren Mischungen mit synthetischen Polymeren, Matrixkomponenten in naturfaserverstärkten Verbundwerkstoffen, bioabbaubares Beschichtungsmaterial oder effektive Kompatibilisatoren für stärkegefüllte Kunststoffe herstellbar.

Bei erreichten Substitutionsgraden 0,5 < DS < 1,5 werden Ausgangsstoffe für bioabbaubare, thermoplastisch verarbeitbare Kunststoffe oder Misch- bzw. Matrixkomponenten in bioabbaubaren Verbunden erhalten.

Bei höheren Substitutionsgraden können hydrophobere Produkte, die für Anwendungen als hydrophobes Beschichtungsmaterial, beispielsweise für Stärkefolien oder Faltschachtelmaterialien, oder als Kompatibilisatoren in hochstärkegefüllten Mischungen mit bioabbaubaren Polyestern, Polyamiden oder Polycarbonaten erhalten werden.

Die variable sowohl technologische wie auch apparatetechnische Verfahrensführung bei der Herstellung der erfindungsgemäßen Polymere ermöglicht eine optimale Anpassung an die jeweils gewünschte Applikation.

Dabei ist es bei der erfindungsgemäßen Vorgehensweise gegenüber den bekannten Lösungen signifikant, daß insbesondere die Hydrophobie der Stärkeprodukte verbessert worden ist.

Durch relativ einfache Bestimmung der Grenzflächenspannung zwischen Wasser und einer Lösung der Polymere in einem organischen Lösungsmittel bzw. durch Bestimmung der Benetzbarkeit der Werkstoffe kann der gewünschte Hydrophobierungsgrad überwacht bzw. eingestellt werden. Daneben kann der Kontaktwinkel der entsprechenden Feststoffe ermittelt werden.

Es wurde außerdem festgestellt, daß eine Abhängigkeit der Oberflächenspannung und dem Substitutionsgrad vorhanden ist. Dabei kann die Oberflächenspannung beeinflußt bzw. berücksichtigt werden. Für unsubstituierte Stärke bedeutet dies eine drastische Umwandlung einer applikationsbestimmenden und einsatzbegrenzenden Basiseigenschaft der Stärke (Hydrophilie).

An Pulvern und Formkörpern der erfindungsgemäß modifizierten Stärken konnte ein maximaler Kontaktwinkel von 90° gemessen werden.

Die erfindungsgemäße Einstellbarkeit des Substitutionsgrades und die daraus resultierende Beeinflussungsmöglichkeit der Oberflächeneigenschaften (gezielt einstellbares Verhältnis hydrophil/hydrophob) eröffnet Kunststoffen Applikationsfelder, die bei chemisch unmodifizierten, thermoplastisch verformbaren Stärken, die auf herkömmliche Art und Weise hergestellt worden sind, aufgrund deren Hydrophilie und der damit verbundenden mangelnden Hydrolysestabilität nicht zugänglich waren. Die erreichbare Hydrophobie der erfindungsgemäß hergestellten Stärke/Fett oder Öl-Produkte verbessert auch ihre Kompatibilität gegenüber synthesechemisch oder biotechnologisch erzeugten, biologisch abbaubaren polymeren Mischungen oder Verbindungskomponenten, wie z.B. aliphatischen Polyestern, Polycarbonaten oder Polyamiden.

Nach der Erfindung können wesentlich höhere Stärkeanteile von bis zu 60 % in Polymer/Polymer-Mischungen eingebracht werden.

Die erfindungsgemäßen Polymere weisen gegenüber bekannten stärkegefüllten Polyolefinen oder Polycaprolactonen, die unter Kompostierbedingungen desintegriert (Polyolefine) oder auch abgebaut werden (Polycaprolacton), wesentlich mehr und anspruchsvollere Einsatzmöglichkeiten aufgrund verbesserter mechanischer Eigenschaften auf.

Wie bereits erwähnt, können auch Polymere mit wesentlich höheren Stärkeanteilen hergestellt werden, als dies nach dem Stand der Technik möglich ist, da durch fehlende Kompatibilität des hydrophoben Matrixmaterials mit dem hydrophilen Füllstoff Stärke nur relativ kleine Stärkeanteile erreicht werden können und demzufolge die Wirtschaftlichkeit relativ schlecht ist.

Beim erfindungsgemäßen Verfahren kann der Stärkeanteil auf bis zu 60 % erhöht werden, da nur relativ kleine Mengen der hydrophoben Stärkederivate mit Substitutionsgraden DS ≈ 2 bis 3 eingesetzt werden müssen. Dadurch wird es möglich, native oder aufbereitete Stärke mit einem Zusatz von bis zu 5 % der erfindungsgemäß zu verwendenden Kompatibilisatoren in für anorganische oder organische Füllstoffe üblichen Mengen mit bekannten Verfahren in entsprechende Kunststoffe einzuarbeiten.

Die durch die jeweilige Modifizierungskomponente bestimmte Reaktionsführung, hinsichtlich Bindungstyp und gewünschten Substitutionsgrad vorgegebene günstige Beeinflußbarkeit auf das erfindungsgemäß herzustellende Produkt, eröffnet neben einer möglichen thermoplastischen Verarbeitung dieser hydrophoben Stärkederivate als Mono- oder Matrixmaterial oder Mischkomponente in bioabbaubaren unverstärkten und verstärkten Stoffen, weiter die Möglichkeit einer Verarbeitung aus einer Lösung oder wäßrigen Suspension.

Bei eingestellten Substitutionsgraden DS ≈ 2,5 bis 3 können hochwirksame Beschichtungsmaterialien für hydrophile Werkstoffe, wie z.B. Folien aus thermoplastisch verformbarer Stärke günstig und auf einfache Weise mit guten Eigenschaften hergestellt werden.

Nachfolgend soll die Erfindung an Ausführungsbeispielen näher erläutert werden.

### Beispiel 1:

### Herstellung eines hydrophoben Stärkegranulats durch reaktive Extrusion

Ausgangsmaterialien: 30 kg Hydroxypropyl-Amylomaisstärke (DS=0,05, Amylosegehalt= 50%), 5 kg Sonneblumenöl;
Extruder: Doppelschneckenextruder
Temperaturprofil: 80° C/ 140° C/ 180° C/ 180° C/ 140° C/ 80° C
In der Transformationszone wurden zwei Rückförderelemente sowie zwei Knetblöcke zur Erhöhung der Scherkräfte eingebaut. Vor der Austrittszone wurden außerdem mehrere linksgängige Förderelemente hintereinandergeschaltet, die für einen Materialrückstau sorgen und somit die Verweilzeit im Extruder verlängern.
Massenstrom: 35 kg/h
Schneckendrehzahl: 180/min
SME: 240kJ/kg
Produkt: weiße Pellets
Löslichkeit in kaltem Wasser: 4 %
Wasseraufnahme: 3,3 % (45 % r.F.) bzw. 10,3 % (95 % r.F.)

### Beispiel 2:

### Herstellung eines hydrophoben Stärkegranulats durch reaktive Extrusion

Ausgangsmaterialien: 30 kg Hydroxypropyl-Amylomaisstärke, 3,3 kg ε-Caprolacton, 1,7 kg Glycerin Herstellung siehe Beispiel 1
Produkt: weiße Pellets
Löslichkeit in kaltem Wasser: 15 %
Wasseraufnahme: 3,8 % (45 % r.F.) bzw. 19,4 % (95 % r.F.)

### Vergleichsbeispiel zu Beispiel 1 und 2 ohne Hydrophobierungsmittel

Ausgangsmaterialien: 30 kg Hydroxypropyl-Amylomaisstärke, 5 kg Glycerin
Herstellung: siehe Beispiel 1
Produkt: durchsichtige Pellets
Löslichkeit in kaltem Wasser: 43 %
Wasseraufnahme: 8,3 % (45 % r.F.) bzw. 30 % (95 % r.F.)

### Beispiel 3:

### Umsetzung von Stärke mit Oleylchlorid in organischer Suspension

500 g Weizenstärke (auf max. 5 Masse-% Wasser getrocknet) werden in 5 l Toluen und 750 ml wasserfreiem Pyridin in einem Rührreaktor suspendiert. Zur Suspension werden bei Raumtemperatur innerhalb 20 Minuten 2785 g Ölsäurechlorid zugegeben, wobei die Temperatur des Gemisches nicht über 30 °C ansteigen soll. Unter intensivem Rühren wird dann innerhalb von 30 Minuten auf 90 °C erwärmt, dabei tritt eine Viskositätszunahme des Reaktionsgemisches durch das Auflösen der Reaktionsprodukte ein und ein Niederschlag von Pyridiniumhydrochlorid bildet sich. Bei einer Temperatur von 90 bis 100 °C wurde noch 5 Stunden gerührt. Der Stärkeester wurde durch Eingießen der Reaktionsmischung in die zehnfache Menge an Ethanol ausgefällt und durch viermaliges Waschen mit einem Ethanol-Wasser-Gemisch (3:1) gereinigt sowie im Vakuumtrockenschrank bei 40 °C getrocknet.
- Ausbeute:: 2947 g Stärke-oleat
- Verseifung:: 83,35 Masse-% Oleylgruppen

### Beispiel 4:

### Umsetzung von Amylose mit Stearoylchlorid in organischer Suspension

500 g Amylose (getrocknet, ca. 1,5 Masse-% Wasser) werden in 7,5 l *n*-Heptan und 750 ml wasserfreiem Pyridin suspendiert. Zur Suspension werden 2800 g Stearinsäurechlorid zugesetzt und der Reaktionsansatz analog Beispiel 1 weiterverarbeitet und aufgearbeitet.
- Ausbeute:: 2965 g Amylose-stearat
- Verseifung:: 83,46 Masse-% Stearoylgruppen

### Beispiel 5:

### Umsetzung von Amylose mit Oleylchlorid in organischer Suspension

500 g Amylose mit 2785 g Oleylchlorid in Gegenwart von 950 g Triethylamin in 5 l Toluen in einem Rührreaktor mit Destillationsaufsatz umgesetzt. Nach Abdestillieren der Hauptmenge des organischen Lösungsmittels wird das zurückbleibende hochviskose Gel in Ethanol gefällt und analog Beispiel 1 durch mehrmaliges Waschen, Abfiltrieren und anschließendem Trocknen aufgearbeitet.
- Ausbeute:: 2900 g Amylose-oleat
- Verseifung:: 72,0 Masse-% Oleylgruppen

### Beispiel 6:

### Umsetzung von Stärke mit Oleylchlorid in organischer Suspension

1 kg Maisstärke werden mit 5,6 kg Oleylchlorid in 10 l Toluen in Gegenwart eines basischen in Toluen löslichen Katalysators, beispielsweise Pyridin oder Dimethylaminopyridin, und 1,2 kg CaO als Säureakzeptor umgesetzt. Nach Abtrennen der unlöslichen Stärkeprodukte sowie des gebildeten CaCl₂ und des überschüssigen CaO wird das Stärke-oleat entsprechend Beispiel 3 isoliert und aufgearbeitet.
- Ausbeute:: 5,5 kg Stärke-oleat
- Verseifung:: 73,0 Masse-% Oleylgruppen

### Beispiel 7:

### Umsetzung von Amylose mit Laurinsäureanhydrid in organischer Suspension

300 g Amylose (getrocknet, ca. 1,5 Masse-% Wasser) werden in 5 l Toluol und 450 ml wasserfreiem Pyridin suspendiert. Unter intensivem Rühren wird in 60 Minuten auf 90 °C erwärmt und die Reaktionsmischung 8 Stunden bei dieser Temperatur gehalten. Der gebildete Amyloseester wurde durch Eingießen der Reaktionsmischung in die zehnfache Menge an Ethanol ausgefällt und durch viermaliges Waschen mit einem Ethanol-Wasser-Gemisch (3:1) gereinigt sowie im Vakuumtrockenschrank bei 40 °C getrocknet.
- Ausbeute:: 1312 g
- Verseifung:: 70,57 Masse-% Lauroylgruppen

### Beispiel 8:

### Umsetzung von Stärke mit dem gemischten Anhydrid der Öl- und Essigsäure in organischer Gelphase

300 g Weizenstärke (getrocknet, ca. 5 Masse-% Wasser) werden in einem evakuierbaren Laborkneter mit 650 g Essigsäure-Ölsäureanhydrid unter Zusatz von 300 ml Dimethylsulfoxid in Gegenwart eines basischen Acylierungskatalysators bei 110 °C umgesetzt. Nach 60 Minuten wird zur vollständigen Abführung der freiwerdenden Essigsäure ein Vakuum von 200 - 300 Pa angelegt und die Reaktion 5 Stunden unter Vakuum fortgeführt. Die hochviskose Reaktionsmischung wird in Ethanol eingetragen und der gebildete Stärkeester ausgefällt. Das Reaktionsprodukt wird entsprechend Beispiel 1 isoliert und aufgearbeitet.
- Ausbeute:: 1150 g
- Verseifung:: 66,8 Masse-% Oleylgruppen

### Beispiel 9:

### Umsetzung von Stärke mit Ölsäure in organischer Gelphase

300 g Weizenstärke (getrocknet, ca. 5 Masse-% Wasser) und 840 g Ölsäure werden in Gegenwart von 150 g gepulvertem KOH unter Zusatz von 300 ml Dimethylsulfoxid in einem Laborkneter intensiv gemischt und das Reaktionsgemisch unter einem Vakuum von 130 Pa 6 Stunden auf 120 °C erwärmt. Das Reaktionsprodukt wird in Ethanol eingetragen, abfiltriert und durch Extraktion mit einem Ethanol-Wasser-Gemisch (3:1) gereinigt.
- Ausbeute:: 875 g
- Verseifung:: 50,9 Masse-% Oleylgruppen

### Beispiel 10:

### Umsetzung von Amylose mit 1,2-Epoxyoctan

1 g Amylose (Merck 1.04561) wird in 50 ml 1,2-Dichlorethan unter heftigem Rühren suspendiert und zum Sieden erhitzt. Nach Zugabe von 0,8 g 1,2-Epoxyoctan wird 48 h in der Siedehitze gerührt.
Anschließend wird das Reaktionsprodukt abfiltriert und mit Diethylether gewaschen. Im Filtrat kann kein 1,2-Epoxyoctan nachgewiesen werden.
Das feste Reaktionsprodukt erhält man in quantitativer Ausbeute (1,8 g); im IR-Spektrum zeigt es die typischen Banden einer gesättigten Alkylkette. Epoxy-Gruppen können im Produkt nicht nachgewiesen werden.

### Beispiel 11:

### Umsetzung von Stärke mit 1,2 Epoxyoctan

1 g lösliche Stärke (Merck 1.01257) wird in 100 ml Wasser / tert.-Butanol (1:1) bei Siedetemperatur gelöst. Nach Zugabe von 0,8 g 1,2-Epoxyoctan wird 48 h in der Siedehitze gerührt.
Anschließend wird das Reaktionsprodukt abfiltriert und mit Diethylether gewaschen. Das Filtrat wird über Natriumsulfat getrocknet. Durch gaschromatographische Analyse nach Zugabe eines inneren Standards (Heptansäureethylester) findet man:
21 % 1,2-Octandiol (bezogen auf das eingesetzte Epoxid)
15 % 1,2-Epoxyoctan (bezogen auf das eingesetzte Epoxid)
Das feste Reaktionsprodukt (1,4 g) zeigt im IR-Spektrum die typischen Banden einer gesättigten Alkylkette. Epoxy-Gruppen können im Produkt nicht nachgewiesen werden.

## Patentansprüche

1. Verfahren zur Herstellung von bioabbaubaren Werkstoffen, bei dem native und/oder aufbereitete Stärke durch Umsetzung mit pflanzlichen Fetten, Ölen und/oder deren Veredlungsprodukten zu mittleren bis hohen Substitutionsgraden DS der Stärke derivatisiert und hydrophobiert werden.

2. Verfahren nach Anspruch 1,
**dadurch gekennzeichnet,**
daß die Derivatisierung, bei einem theoretischen Substitutionsgrad der Stärke von DS = 3, bis zu einem praktischen Substitutionsgrad zwischen 0,5 < DS < 3 durchgeführt wird.

3. Verfahren nach Anspruch 1 oder 2,
dadurch gekennzeichnet, daß die Synthese mittels einer Acylierungsreaktion durchgeführt wird.

4. Verfahren nach Anspruch 1 oder 2,
dadurch gekennzeichnet, daß eine Umesterungsreaktion von Fettsäureestern durchgeführt wird.

5. Verfahren nach Anspruch 1 oder 2,
dadurch gekennzeichnet, daß eine ringöffnende Aloxylierungsreaktion mit epoxidierten Fettsäureestern durchgeführt wird.

6. Verfahren nach Anspruch 1 oder 2,
dadurch gekennzeichnet, daß Alkylierungsreaktionen halogenierter Fettsäureester an den Hydroxylgruppen der Stärken durchgeführt werden.

7. Verfahren nach einem der Ansprüche 1 bis 6,
dadurch gekennzeichnet, daß die Umsetzungen in Abhängigkeit der Hydrophobierungskomponente und dem angestrebten Substitutionsgrad DS in Lösung, in gequollener organischer Phase oder in nichtwäßriger Suspension oder durch reaktive Extrusion durchgeführt werden.

8. Verfahren nach einem der Ansprüche 1 bis 7,
dadurch gekennzeichnet, daß die Hydrophobie durch Bestimmung der Grenzflächenspannung zwischen Wasser und einer Lösung der Polymere in einem organischen Lösungsmittel oder durch Bestimmung des Kontaktwinkels der Werkstoffe mit Wasser bestimmt wird.
